(19) **Europäisches Patentamt / European Patent Office / Office européen des brevets**

(11) **EP 3 605 819 B1**

(12) **EUROPEAN PATENT SPECIFICATION**

(45) Date of publication and mention
of the grant of the patent:
**04.10.2023 Bulletin 2023/40**

(21) Application number: **19169270.6**

(22) Date of filing: **15.04.2019**

(51) International Patent Classification (IPC):
*H02M 3/00* (2006.01)    *H02M 3/335* (2006.01)

(52) Cooperative Patent Classification (CPC):
**H02M 3/33571; H02M 3/01;** H02M 1/0032;
H02M 1/0045; H02M 1/0058; Y02B 70/10;
Y02P 80/10

(54) **SWITCHING POWER SUPPLY DEVICE**

SCHALTNETZTEILVORRICHTUNG

COMMUTATION DE DISPOSITIF D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2018 JP 2018146677**

(43) Date of publication of application:
**05.02.2020 Bulletin 2020/06**

(73) Proprietor: **OMRON Corporation
Shiokoji-dori, Shimogyo-ku
Kyoto-shi
Kyoto 600-8530 (JP)**

(72) Inventors:
• **NAGANO, Masaaki**
  **Kyoto, 600-8530 (JP)**
• **TANINO, Kohei**
  **Kyoto, 600-8530 (JP)**

(74) Representative: **Emde, Eric
Wagner & Geyer Partnerschaft mbB
Patent- und Rechtsanwälte
Gewürzmühlstrasse 5
80538 München (DE)**

(56) References cited:
**CN-B- 103 036 425    JP-A- 2013 143 877
JP-A- 2018 107 896    US-A1- 2006 114 698**

## Description

## BACKGROUND

Technical Field

The disclosure relates to a switching power supply device.

Description of Related Art

At the time of a designed load, a switching power supply device operates as designed. However, at the time of a light load or no load, a different operation may be performed and thus some countermeasures may be required therefor. For example, Japanese Laid-open No. 2003-52174 (Patent Document 1) discloses a switching power supply device including a circuit for detecting a light load and a control circuit for intermittently operating switching elements in response to a light-load detection signal. For example, Japanese Laid-open No. H8-340675 (Patent Document 2) discloses a dummy load connected to the output of a switching power supply circuit at the time of a light load of the switching power supply circuit.

Patent Documents

> [Patent Document 1] Japanese Laid-open No. 2003-52174
> [Patent Document 2] Japanese Laid-open No. H8-340675

Attention is drawn to document JP 2013 143 877 A which relates to a switching power supply that has high efficiency even in a light load state despite a large output, low noise two-element half bridge resonant type. In particular, this document relates to a switching power supply which has a switch section for switching a resonance point of an LC resonance circuit. In accordance with the status of a load, the resonance point and an operating frequency are switched to appropriate ones.

Further attention is drawn to document CN 103 036 425 B which relates to a direct current (DC)-DC convertor dead load which comprises a sampling resistor, a control circuit, a power switch tube, a resistive load, a load access terminal OUT- and a load access terminal OUT+. One end of the sampling resistor is connected with an output cathode of a DC-DC convertor, an input negative terminal Cin- of the control circuit, an output negative terminal Cout- of the control circuit and an emitting electrode of the power switch tube, and the other end of the sampling resistor is connected with the load access terminal OUT- of the DC-DC convertor and an input positive terminal Cin+ of the control circuit. An output positive terminal Cout+ of the control circuit is connected with a gate pole of the power switch tube. One end of the resistive load is connected with a collector of the power switch tube, and the other end of the resistive load is connected with an output anode of the DC-DC convertor and the load access terminal OUT+. Finally, attention is drawn to document US 2006/114698 A1 which relates to a first side circuit connected to a primary coil of a transformer which includes a main switching element driving the primary coil, and a control circuit which detects an output voltage to feedback and drives and controls the main switching element so as to keep constant the output voltage by acquiring a voltage induced in a tertiary coil of the transformer. A secondary side circuit of the transformer includes a dummy load circuit connected to the output terminal, a detection circuit which detects a secondary coil voltage of the transformer, and a dummy load control circuit which is controlled by the detection circuit and controls so as to flow current flow through the dummy load circuit only in a state of a light load.

## SUMMARY

Recently, an LLC type DC/DC converter (hereinafter referred to as an LLC resonant converter) has been widely used. In this LLC type, soft switching is realized using resonance according to two inductances L and one capacitance C.

In the case of LLC type, a switching frequency increases at the time of a light load due to characteristics of the LLC type. Accordingly, when a switching element is operated at a high switching frequency at the time of rated output of an LLC resonant converter, the switching frequency at the time of a light load further increases and thus a control circuit IC may not control the switching element. In such a case, the LLC resonant converter performs a burst operation.

An object of the disclosure is to provide an LLC type switching power supply device in accordance with claim 1 in which it is difficult for a burst operation to occur at the time of a light load.

According to the invention, a switching power supply device includes an LLC resonant converter. The LLC resonant converter includes a transformer having a primary winding and a secondary winding, a first capacitor connected to the primary winding of the transformer, a switching circuit which controls power transmission to the transformer and the first capacitor, a rectification circuit connected to the secondary winding of the transformer, a second capacitor connected to the rectification circuit, and an output terminal connected to the rectification circuit and the second capacitor. The switching power supply device further includes a stabilizing circuit which is connected to the output terminal and consumes power at time of a light load of the LLC resonant converter.

According to the aforementioned configuration, it is possible to provide an LLC type switching power supply device in which it is difficult for a burst operation to occur at the time of a light load. The stabilizing circuit generates a load at the time of a light load to consume power. Accordingly, an increase in the switching frequency of the LLC resonant converter is suppressed. Therefore, it is possible to prevent transition of the switching power supply device to a burst operation state.

According to the invention, the stabilizing circuit includes a light load detection circuit which detects a light load state of the LLC resonant converter on the basis of a secondary-side current flowing through a secondary-side circuit of the LLC resonant converter including the secondary winding of the transformer, the rectification circuit and the second capacitor, and a transistor electrically connected between the output terminal of the LLC resonant converter and a ground and turned on by the light load detection circuit.

According to the aforementioned configuration, since the stabilizing circuit can be operated only in a light load state, it is possible to prevent the efficiency of the switching power supply device from deteriorating at the time of a normal operation of the switching power supply device.

According to the invention, the light load detection circuit includes a first resistor which converts the secondary-size current into a first voltage, a second resistor which converts a current flowing through the transistor into a second voltage, a voltage generation circuit which generates a third voltage changing in a direction reverse to a direction in which the first voltage changes, and a driving circuit which turns the transistor on when the third voltage exceeds the second voltage.

According to the aforementioned configuration, it is possible to detect whether the switching power supply device is in a light load state on the basis of the secondary-side current and current flowing through the transistor.

According to the invention, the voltage generation circuit includes a resistance circuit including a plurality of resistors connected in series between the output terminal of the LLC resonant converter and the ground, a first amplifier which amplifies the first voltage, and a second amplifier which has a first input connected to the output of the first amplifier and the output of the resistance circuit to receive the third voltage and a second input for receiving the second voltage, and outputs a voltage for driving the transistor.

According to the aforementioned configuration, when the secondary-side current decreases, a constant current can flow through the transistor. Accordingly, it is possible to operate the stabilizing circuit in a light load state of the switching power supply device. When the secondary-side current increases because the load of the switching power supply device increases, the transistor is turned off. Accordingly, it is possible to operate the stabilizing circuit only in a light load state.

According to this disclosure, it is possible to cause a burst operation to hardly occur at the time of a light load of an LLC type switching power supply device.

## BRIEF DESCRIPTION OF THE DRAWINGS

FIG. 1 is a circuit diagram of a switching power supply device according to the present embodiment.
FIG. 2 is an equivalent circuit diagram of a configuration example of a stabilizing circuit.
FIG. 3 is a diagram for describing an operation of the stabilizing circuit shown in FIG. 2.
FIG. 4 is a voltage waveform diagram showing an example of an operation at the time of a light load of an LLC resonant converter.
FIG. 5 is a diagram showing normalized frequency characteristics of an LLC resonant circuit.
(A) and (B) of FIG. 6 are voltage waveform diagrams describing effects of the stabilizing circuit according to the present embodiment.

## DESCRIPTION OF THE EMBODIMENTS

Embodiments of this disclosure will be described in detail with reference to the drawings. Meanwhile, the same or corresponding parts in the figures are denoted by the same reference signs and description thereof will not be repeated.

<Application example>

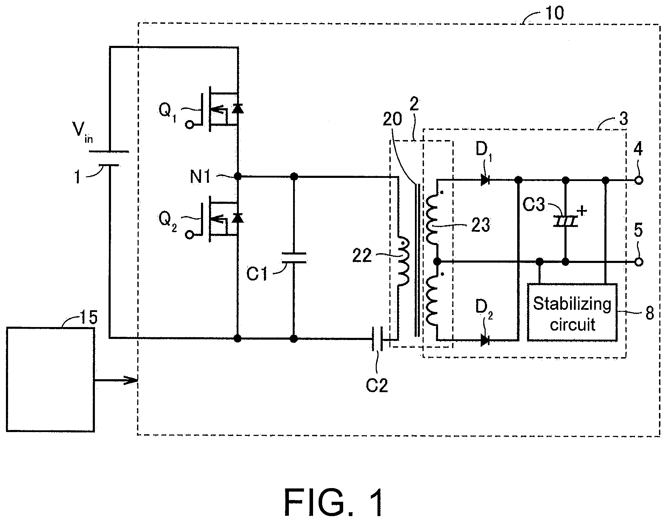

First, an example of a situation in which the disclosure is applied will be described using FIG. 1. FIG. 1 is a circuit diagram of a switching power supply device according to the present embodiment. As shown in FIG. 1, a switching power supply device 10 according to the present embodiment is a switching power supply device in which an LLC type is employed.

The switching power supply device 10 includes an LLC resonant converter. For example, the LLC resonant converter includes semiconductor switches $Q_1$ and $Q_2$ that are metal oxide semiconductor field effect transistors (MOSFETs), a transformer 2, capacitors C1 and C2, a secondary-side circuit 3, and output terminals 4 and 5.

The transformer 2 includes a core 20, a primary winding 22 and a secondary winding 23. The capacitors C1 and C2 are connected to the primary winding 22 of the transformer 2. Specifically, a first terminal of the primary winding 22 is connected to a first terminal of the capacitor C1. A second terminal of the primary winding 22 is connected to a first terminal of the capacitor C2. Further, a second terminal of the capacitor C1 and a second terminal of the capacitor C2 are connected to each other and connected to a negative electrode of a power supply 1. In this embodiment, the capacitor C2 corresponds to a "first capacitor."

The transformer 2 may have a configuration in which a resonance inductor and a closely coupled transformer are combined. That is, a part of the primary winding may be used for a resonance inductor and the other part of the primary winding and the secondary winding 23 may constitute the closely coupled transformer. Alternatively, the transformer 2 may be a leakage flux transformer. In this case, a leakage inductance can be used for a resonance inductor. Accordingly, the resonant inductor and the closely coupled transformer can be integrated.

The semiconductor switches $Q_1$ and $Q_2$ constitute switching circuits that control power transmission to the transformer 2, the capacitor C2 (first capacitor) and the capacitor C1. Specifically, the semiconductor switches $Q_1$ and $Q_2$ constitute half bridge circuits serially connected between the positive electrode and the negative electrode of the power supply 1. A connecting point N1 of the semiconductor switches $Q_1$ and $Q_2$ is connected to the first terminal of the primary winding 22 of the transformer 2. The power supply 1 is a DC power supply that outputs a DC voltage $V_{in}$. Turning of the semiconductor switches $Q_1$ and $Q_2$ on and off is controlled by a control signal from a control IC 15 (however, the disclosure is not limited to there being a control IC 15), for example.

The secondary-side circuit 3 includes the secondary winding 23 of the transformer 2, diodes $D_1$ and $D_2$, and a capacitor C3. The diodes $D_1$ and $D_2$ constitute a rectification circuit connected to the secondary winding 23 of the transformer 2. The capacitor C3 (second capacitor) is connected to the rectification circuit.

The switching power supply device 10 further includes a stabilizing circuit 8. The stabilizing circuit 8 is connected to the output terminals 4 and 5 of the LLC resonant converter. Specifically, the stabilizing circuit 8 consumes power at the time of a light load of the switching power supply device 10 (LLC resonant converter). In the case of the LLC type, a switching frequency increases at the time of a light load. When a switching element is operated at a high switching frequency, the switching frequency further increases at the time of a light load and thus a control IC may not be able to control the semiconductor switches. However, a light load of the switching power supply device 10 is compensated for since the stabilizing circuit 8 consumes power. Accordingly, a switching frequency increase can be suppressed to decrease a likelihood that the switching power supply device 10 (LLC resonant converter) will perform a burst operation.

<Configuration of stabilizing circuit>

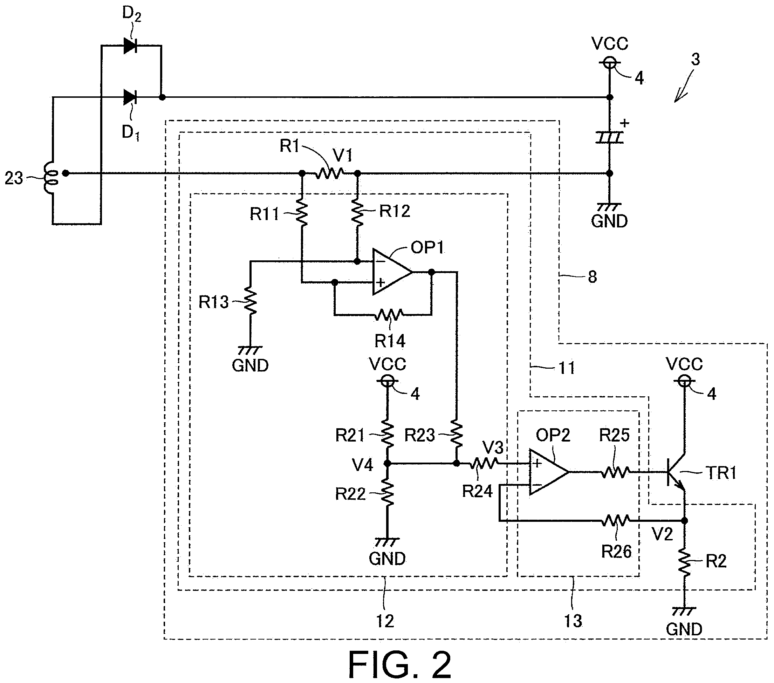

FIG. 2 is an equivalent circuit diagram of a configuration example of the stabilizing circuit 8. As shown in FIG. 2, the stabilizing circuit 8 includes a light load detection circuit 11 and a transistor TR1. The light load detection circuit 11 detects a light load state of the switching power supply device 10 (LLC resonant converter) on the basis of a current flowing through the secondary-side circuit 3 of the switching power supply device 10 (LLC resonant converter).

The transistor TR1 is electrically connected between the output terminal 4 of the LLC resonant converter and the ground and is turned on by the light load detection circuit 11. Based on the transistor TR1 is turned on, the stabilizing circuit 8 consumes power. Accordingly, the operation of the switching power supply device 10 at the time of a light load can be stabilized. Meanwhile, "VCC" represents a voltage generated at the output terminal 4 shown in FIG. 1.

The light load detection circuit 11 includes resistors R1 and R2, a voltage generation circuit 12, and a driving circuit 13. The resistor R1 is a resistor for converting the current flowing through the secondary-side circuit 3 into a first voltage (voltage V1). In other words, the resistor R1 is a resistor for detecting the current flowing through the secondary-side circuit 3. A first terminal of the resistor R1 is connected to a center tap of the secondary winding 23 of the transformer 2 (refer to FIG. 1). A second terminal of the resistor R1 is connected to the ground.

The resistor R2 is a resistor for converting a current flowing through the transistor TR1 into a second voltage (voltage V2). In other words, the resistor R2 is a resistor for measuring the current flowing through the transistor TR1. The resistor R2 is connected between the transistor TR1 and the ground. It is possible to detect whether the switching power supply device 10 is in a light load state on the basis of the current of the secondary-side circuit 3 and the current flowing through the transistor TR1 by using the resistors R1 and R2.

The voltage generation circuit 12 generates a third voltage (voltage V3) changing in a direction reverse to that of the first voltage (voltage V1). "Reverse direction" corresponds to a relationship in which, when one of the voltages V1 and V3 increases, the other voltage decreases. The voltage generation circuit 12 includes an operational amplifier OP1, resistors R11, R12, R13, R14, R21, R22, R23 and R24.

The resistor R11 connects the first terminal of the resistor R1 and the non-inverting input (positive side input) of the operational amplifier OP1. The resistor R12 connects the second terminal of the resistor R1 and the inverting input (negative side input) of the operational amplifier OP1. The resistor R13 connects the inverting input of the operational amplifier OP1 and the ground. The resistor R14 connects the output of the operational amplifier OP1 and the non-inverting input of the operational amplifier OP1. Accordingly, the operational amplifier OP1 amplifies the voltage V1.

The resistor R21 and the resistor R22 are connected in series between the output terminal 4 (voltage VCC) and the ground to form a resistance circuit. The connecting point of the resistor R21 and the resistor R22 corresponds to an output point of the resistance circuit. A voltage V4 proportional to the voltage VCC (voltage obtained by multiplying voltage VCC by a division ratio) is output from the output point of the resistance circuit.

The resistor R23 and the resistor R24 are connected in series to the output of the operational amplifier OP1. The connecting point of the resistor R23 and the resistor R24 is connected to the connecting point of the resistor R21 and the resistor R22. According to such a configuration, a constant current can flow through the transistor TR1 when the current flowing through the secondary-side circuit 3 decreases. Accordingly, the stabilizing circuit 8 is operated in a light load state of the switching power supply device 10. On the other hand, when the current flowing through the secondary-side circuit 3 increases because the load of the switching power supply device 10 increases, the transistor TR1 is turned off. Accordingly, the stabilizing circuit 8 is operated only in a light load state.

The driving circuit 13 includes an operational amplifier OP2 and resistors R25 and R26. The operational amplifier OP2 is an operational amplifier for turning the transistor TR1 on only in a light load state. The non-inverting input (positive side input) of the operational amplifier OP2 is connected to one terminal of the resistor R24. Accordingly, the voltage V3 is applied to the non-inverting input (positive side input) of the operational amplifier OP2. On the other hand, the inverting input (negative side input) of the operational amplifier OP2 is connected to the connecting point of the transistor TR1 and the resistor R2 through the resistor R26. Accordingly, the voltage V2 is applied to the inverting input (negative side input) of the operational amplifier OP2. The output of the operational amplifier OP2 is connected to a control electrode of the transistor TR1 through the resistor R25.

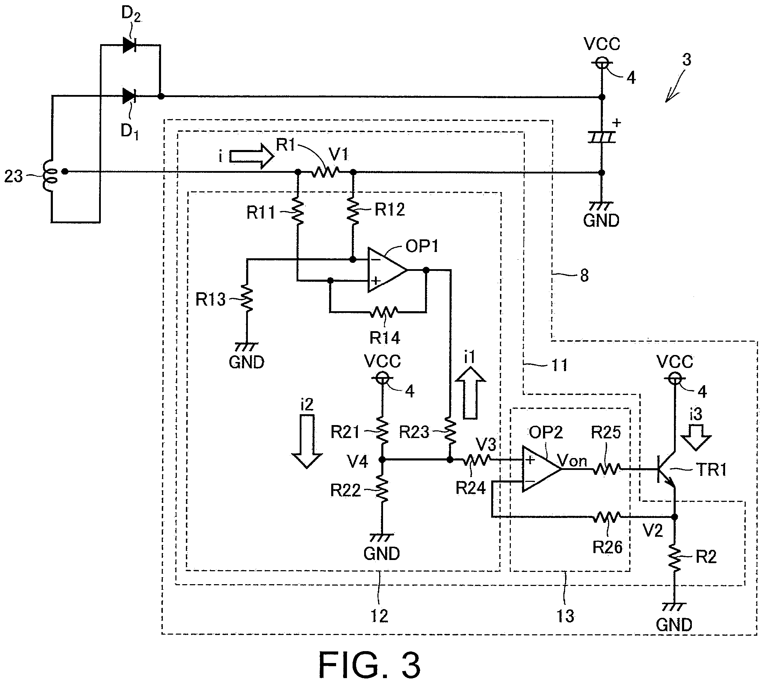

FIG. 3 is a diagram for describing the operation of the stabilizing circuit shown in FIG. 2. A current i flowing through the resistor R1 is small at the time of a light load of the switching power supply device 10. Accordingly, the voltage V1 is low. In this case, a negative voltage generated in the operational amplifier OP1 decreases. When a current il flowing through the resistor R23 to the output of the operational amplifier OP1 is compared with a current i2 flowing through the resistor R21 from the output terminal 4, i2>il. Consequently, the input voltage (V3) of the positive side of the operational amplifier OP2 increases. That is, the voltage V3 increases when the voltage V1 decreases. Since the voltage V3 becomes higher than the input voltage (V2) of the negative side of the operational amplifier OP2, the output level of the operational amplifier OP2 becomes high. Accordingly, a voltage Von is output from the operational amplifier. OP2. When the voltage Von is applied to the control electrode of the transistor TR1, the transistor TR1 is turned on.

When the transistor TR1 is turned on, a current i3 having a constant magnitude flows through the transistor TR1 and the resistor R2. Accordingly, a power having a magnitude of Vcc×i3 is consumed by the resistor R2.

When the load (not shown in FIG. 3) of the switching power supply device 10 increases and thus the current (i.e., current i) flowing through the load increases to equal to or greater than the constant magnitude, the voltage V1 increases. Accordingly, the value of the current i1 increases. In this case, the voltage V3 decreases. That is, when the voltage V1 increases, the voltage V3 decreases. When i1>i2, the output level of the operational amplifier OP2 changes from a high level to a low level. When the output level of the operational amplifier OP2 becomes low, the transistor TR1 is turned off. Accordingly, consumption of power by the resistor R2 is stopped. In this manner, the stabilizing circuit 8 can consume power only in a light load state of the switching power supply device 10 (i.e., in a case in which the current i decreases to below a constant value).

<Operation of LLC resonant converter>

In the switching power supply device 10, a resonance circuit is formed of the inductance (or leakage inductance) of the resonance inductor of the primary winding and the capacitance of the capacitor C2. In the LLC resonant converter, an output voltage is controlled according to frequency changes using LC resonance. A resonance angular frequency $\omega_0$ is determined by the inductance $L_{SR}$ of the resonance inductor and the capacitance $C_r$ of the capacitor C2 as follows.

$$\omega_0 = 1/(L_{SR} \times C_r)^{1/2}$$

In the above equation, a square root (V) is represented in the form of a power (1/2 power). A frequency $f_0 = \omega_0/2\pi$ is about 100 kHz, for example.

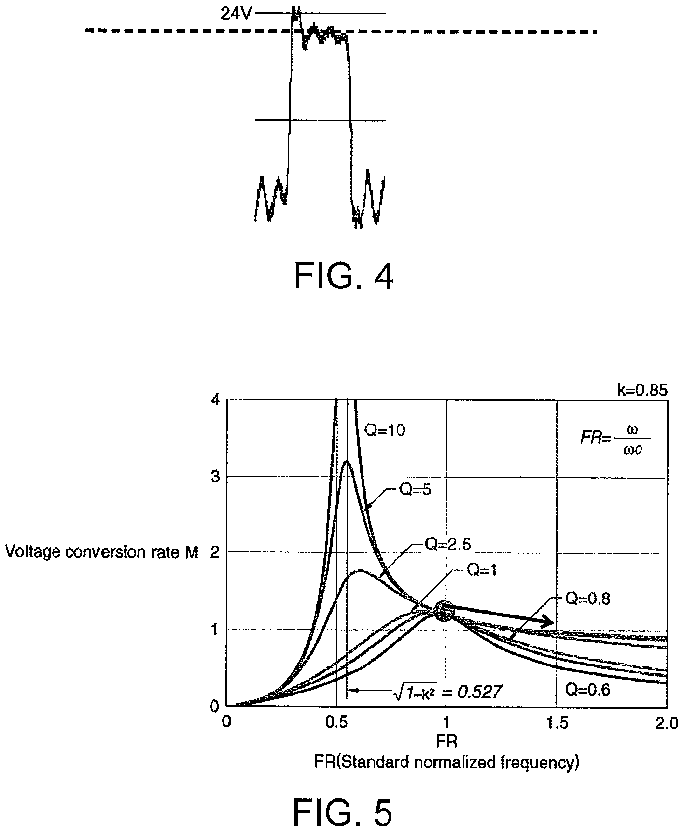

FIG. 4 is a voltage waveform diagram showing an example of an operation of the LLC resonant converter at the time of a light load. Further, FIG. 4 shows a voltage waveform of the secondary winding 23 of the transformer 2. For example, a normal output of the switching power supply device 10 is DC 24 V. Referring to FIG. 4, the output voltage 24V is kept according to a surge portion at the time of a light load. However, the substantial magnitude of the output voltage is the magnitude of the portion indicated by a broken line. The substantial output at the time of a light load is lower than the original output voltage (24V).

FIG. 5 is a diagram showing normalized frequency characteristics of an LLC resonance circuit. Referring to FIG. 5, the horizontal axis (FR) of the graph represents a frequency normalized with a resonance angular frequency $\omega_0$. That is, a numerical value of the horizontal axis represents a ratio $\omega/\omega_0$ of a switching frequency $\omega$ to the resonance angular frequency $\omega_0$. The vertical axis of the graph represents a ratio of an output voltage to an input voltage. Further, k denoted in the graph represents a coupling constant of a transformer (for example, k=0.85).

The LLC resonance circuit operates having an operating point of FR=1 ($\omega=\omega_0$) as a center. Since Q increases due to a light load, a gain peak moves to a low frequency range. In this case, the switching frequency $\omega$

increases because the output voltage decreases and the gain of the switching power supply device 10 decreases. When the switching frequency ω increases, the operating point moves to a range in which FR>1. When the switching frequency ω increases while the switching power supply device 10 is in a light load state, the switching power supply device 10 is likely to perform a burst operation.

<Operation and effect of stabilizing circuit>

In the present embodiment, it is possible to cause a burst operation to hardly occur at the time of a light load state by providing the stabilizing circuit 8 at the output of the switching power supply device 10.

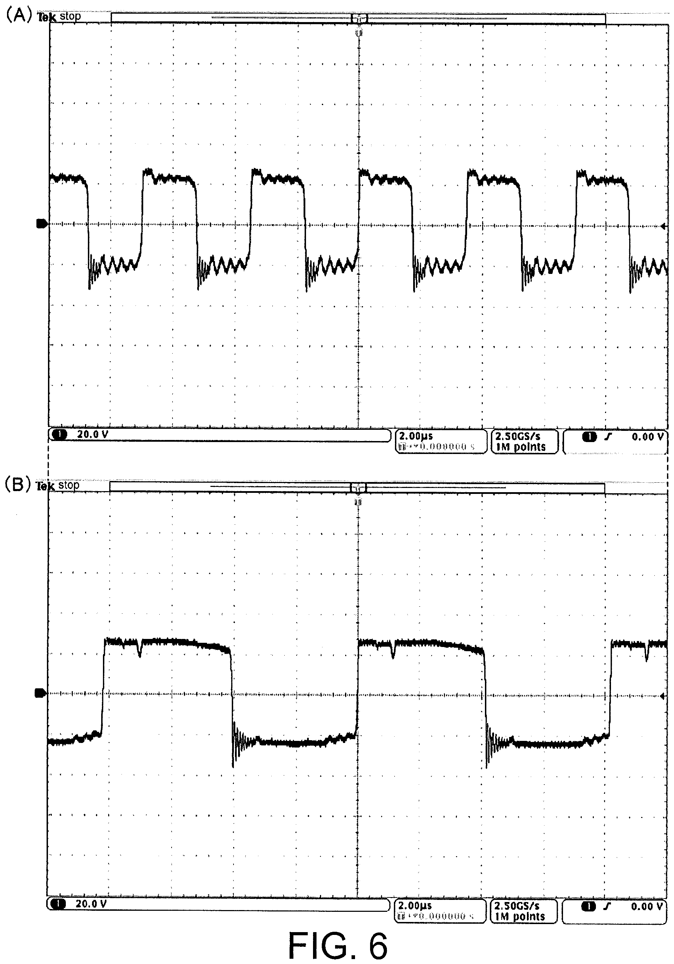

(A) and (B) of FIG. 6 are voltage waveform diagrams describing the effect of the stabilizing circuit 8 according to the present embodiment. (A) of FIG. 6 is a voltage waveform diagram when an LLC resonant converter operates in a light load state. (B) of FIG. 6 is a voltage waveform diagram when the stabilizing circuit 8 is added to the LLC resonant converter. The time scales of the horizontal axes are the same in (A) of FIG. 6 and (B) of FIG. 6.

As can be understood from comparison between (A) of FIG. 6 and (B) of FIG. 6, a switching frequency is high at the time of a light load. When a burst occurs, the LLC resonant converter enters an intermittent operation state, causing a problem that a noise at the time of a light load increases or a response to load change becomes slow. As shown in (B) of FIG. 6, the switching power supply device 10 according to the present embodiment operates the stabilizing circuit 8 at the time of a light load state. The stabilizing circuit 8 generates a load to consume power. Accordingly, an increase in the switching frequency ω is suppressed and thus transition of the switching power supply device 10 to a burst operation state is prevented.

In addition, according to the present embodiment, a ripple noise increase at the time of a light load can be suppressed since a burst does not occur. Further, a ripple noise frequency can be stabilized or dynamic load variation can be improved.

Moreover, when the stabilizing circuit 8 is configured to constantly consume power, the efficiency of the switching power supply device 10 deteriorates in a normal operation of the switching power supply device 10. In addition, the amount of heat generated from the switching power supply device 10 increases. In the present embodiment, the stabilizing circuit 8 consumes power only in a light load state. Accordingly, it is possible to prevent the efficiency of the switching power supply device 10 from deteriorating in a normal operation thereof and to suppress an increase in the amount of generated heat.

When the semiconductor switches $Q_1$ and $Q_2$ are selected in consideration of an increase in the switching frequency at the time of a light load, semiconductor switches for a high frequency must be selected as the semiconductor switches $Q_1$ and $Q_2$. However, a general LLC resonant converter has a switching frequency of about 100 kHz. When a semiconductor switch that can also operate at a higher switching frequency is selected, a narrow choice of the semiconductor switches $Q_1$ and $Q_2$ is provided. According to the present embodiment, it is possible to prevent the switching frequency of the semiconductor switches $Q_1$ and $Q_2$ from increasing because the stabilizing circuit 8 can prevent a burst operation. Accordingly, the range of choice of the semiconductor switches $Q_1$ and $Q_2$ can be widened. Therefore, a degree of freedom of design of the switching power supply device 10 can be increased.

[Reference Signs List]

1 Power supply
2 Transformer
3 Secondary-side circuit
4, 5 Output terminal
8 Stabilizing circuit
10 Switching power supply device
11 Light load detection circuit
12 Voltage generation circuit
13 Driving circuit
20 Core
22 Primary winding
23 Secondary winding
C1, C2, C3 Capacitor
$D_1$, $D_2$ Diode
15 Control IC
N1 Connecting point
OP1, OP2 Operational amplifier
$Q_1$, $Q_2$ Semiconductor switch
R1, R2, R11, R12, R13, R14, R21, R22, R23, R24, R25, R26 Resistor
TR1 Transistor
V1, V2, V3, V4, Von Voltage
$V_{in}$, DC voltage
$F_0$ frequency
i, il, i2, i3 Current

**Claims**

1. A switching power supply device (10), comprising:

an LLC resonant converter,
wherein the LLC resonant converter includes:

a transformer (2) having a primary winding (22) and a secondary winding (23);
a first capacitor (C2) connected to the primary winding (22) of the transformer (2);
a switching circuit which controls power transmission to the transformer (2) and the first capacitor (C2);
a rectification circuit having a first input and a second input connected to a first terminal and a second terminal, respectively, of the secondary winding (23) of the transformer (2);
a second capacitor (C3) having a first terminal connected to an output of the rectification circuit;
a first output terminal (4) connected to the output of the rectification circuit and the first terminal of the second capacitor (C3), and a second output terminal (5) connected to a second terminal of the second capacitor (C3) and a ground,
the switching power supply device (10) further comprising a stabilizing circuit (8) which is connected to the first and second output terminals (4, 5) and configured to consume power during a light load state of the LLC resonant converter,
wherein the stabilizing circuit (8) includes:

a light load detection circuit (11) configured to detect the light load state of the LLC resonant converter on the basis of a secondary-side current flowing through a secondary-side circuit (3) of the LLC resonant converter, the secondary-side circuit including the secondary winding (23) of the transformer (2), the rectification circuit and the second capacitor (C3); and
a transistor (TR1) having a first terminal connected to the first output terminal (4) of the LLC resonant converter and a second terminal coupled to the ground and configured to be turned on by the light load detection circuit (11),
wherein the light load detection circuit (11) includes:

a first resistor (R1) configured to convert the secondary-side current into a first voltage (V1);
a second resistor (R2) having a first terminal connected to the second terminal of the transistor, a second terminal connected to the ground and configured to convert a current flowing through the transistor (TR1) into a second voltage (V2);
a voltage generation circuit (12) configured to generate a third voltage (V3) changing in a direction reverse to a direction in which the first voltage (V1) changes, wherein the voltage generation circuit (12) includes:

a resistance circuit including a plurality of resistors (R21, R22) connected in series between the first output terminal (4) of the LLC resonant converter and the ground;
a first amplifier (OP1) configured to amplify the first voltage (V1); and
a second amplifier (OP2) which has a non-inverting input connected to the output of the first amplifier (OP 1) and the output of the resistance circuit and configured to receive the third voltage (V3), an inverting input configured to receive the second voltage (V2), and an output coupled to a control terminal of the transistor (TR1) and configured to output a voltage (Von) for driving the transistor (TR1), wherein the transistor (TR1) is turned on in the light load state.

**Patentansprüche**

1. Schalt-Stromversorgungsvorrichtung (10), umfassend:

einen LCC Resonanzkonverter,
wobei der LCC Resonanzkonverter enthält:

einen Transformator (2), aufweisend eine erste Wicklung (22) und eine zweite Wicklung (23);
einen ersten Kondensator (C2), der mit der ersten Wicklung (22) des Transformators (2) verbunden ist;
einen Schaltstromkreis, der Stromübertragung an den Transformator (2) und den ersten Kondensator (C2) steuert;
eine Gleichrichterschaltung, aufweisend einen ersten Eingang und einen zweiten Eingang, verbunden mit einem ersten Anschluss bzw. einem zweiten Anschluss, der zweiten Wicklung (23) des Transformators (2);
einen zweiten Kondensator (C3), aufweisend einen ersten Anschluss, der mit einem Ausgang der Gleichrichterschaltung verbunden ist;
einen ersten Ausganganschluss (4), der mit dem Ausgang der Gleichrichterschaltung und dem ersten Anschluss des zweiten Kondensators (C3) verbunden ist und einen zweiten Ausganganschluss (5), verbunden mit einem zweiten Anschluss des zweiten Kondensators (C3) und einer Masse,

die Schalt-Stromversorgungsvorrichtung (10) ferner eine Stabilisierungsschaltung (8) umfasst, die mit dem ersten und zweiten Ausgangsanschluss (4, 5) verbunden ist und konfiguriert ist, um Strom zu verbrauchen, während eines leichten Ladezustands des LCC Resonanzkonverters,

wobei die Stabilisierungsschaltung (8) enthält:

eine leichte Ladeerfassungsschaltung (11), die konfiguriert ist, um den leichten Ladezustand des LCC Resonanzkonverters basierend auf einen Sekundärstrom, der durch eine sekundärseitige Schaltung (3) des LCC Resonanzkonverters fließt, zu erfassen, wobei die sekundärseitige Schaltung die zweite Wicklung (23) des Transformators (2), die Gleichrichterschaltung und den zweiten Kondensator (C3) enthält; und

einen Transistor (TR1), aufweisend einen ersten Anschluss, verbunden mit dem ersten Ausgangsanschluss (4) des LCC Resonanzkonverters und einen zweiten Ausgangsanschluss, gekoppelt mit der Masse und konfiguriert, um eingeschalten zu werden, durch die leichte Ladeerfassungsschaltung (11), wobei die leichte Ladeerfassungsschaltung (11) enthält:

einen ersten Widerstand (R1), der konfiguriert ist, um Sekundärstrom in eine erste Spannung (V1) umzuwandeln;

einen zweiten Widerstand (R2), aufweisend einen ersten Anschluss, verbunden mit dem zweiten Anschluss des Transistors, wobei ein zweiter Anschluss mit der Masse verbunden ist und konfiguriert ist, um einen Strom, der durch den Transistor (TR1) fließt, in eine zweiten Spannung (V2) umzuwandeln;

eine Spannungserzeugungsschaltung (12), die konfiguriert ist, um eine dritte Spannung (V3) zu erzeugen, die in eine Richtung sich ändert, entgegengesetzt zu einer Richtung, in der die erste Spannung (V1) sich ändert, wobei die Spannungserzeugungsschaltung (12) enthält:

eine Widerstandsschaltung, die eine Vielzahl von Widerständen (R21, R22) enthält, die in Reihe zwischen dem ersten Ausgangsanschluss (4) des LCC Resonanzkonverters und der Masse verbunden ist;

einen ersten Verstärker (OP1), der konfiguriert ist, um die erste Spannung (V1) zu verstärken; und

einen zweiten Verstärker (OP2), der einen nicht-invertierenden Eingang aufweist, der mit dem Ausgang des ersten Verstärkers (OP1) und dem Ausgang der Widerstandsschaltung verbunden ist und konfiguriert ist, um die dritte Spannung (V3) zu empfangen, einen invertierenden Eingang, die konfiguriert ist, die zweite Spannung (V2) zu empfangen, und einen Ausgang, gekoppelt an einen Steueranschluss des Transistors (TR1) und konfiguriert ist, um eine Spannung (Von) zum Antreiben des Transistors (TR1) auszugeben, wobei der Transistor (TR1) in dem leichten Ladezustand eingeschaltet ist.

**Revendications**

1. Dispositif d'alimentation à commutation (10), comprenant :

un convertisseur résonnant LLC, dans lequel le convertisseur résonnant LLC comprend :

un transformateur (2) comportant un enroulement primaire (22) et un enroulement secondaire (23) ;

un premier condensateur (C2) connecté à l'enroulement primaire (22) du transformateur (2) ;

un circuit de commutation qui contrôle la transmission de puissance au transformateur (2) et au premier condensateur (C2) ;

un circuit de redressement comportant une première entrée et une deuxième entrée connectées respectivement à une première borne et à une deuxième borne de l'enroulement secondaire (23) du transformateur (2) ;

un deuxième condensateur (C3) comportant une première borne connectée à une sortie du circuit de redressement ;
une première borne de sortie (4) connectée à la sortie du circuit de redressement et à la première borne du deuxième condensateur (C3), et
une deuxième borne de sortie (5) connectée à une deuxième borne du deuxième condensateur (C3) et à une masse,
le dispositif d'alimentation à commutation (10) comprenant en outre un circuit de stabilisation (8) qui est connecté aux première et deuxième bornes de sortie (4, 5) et configuré pour consommer de l'énergie dans un état de faible charge du convertisseur résonnant LLC,
dans lequel le circuit de stabilisation (8) comprend :

un circuit de détection de faible charge (11) configuré pour détecter l'état de faible charge du convertisseur résonnant LLC sur la base d'un courant côté secondaire circulant dans un circuit côté secondaire (3) du convertisseur résonnant LLC, le circuit côté secondaire comprenant l'enroulement secondaire (23) du transformateur (2), le circuit de redressement et le deuxième condensateur (C3) ; et
un transistor (TR1) comportant une première borne connectée à la première borne de sortie (4) du convertisseur résonnant LLC et une deuxième borne couplée à la masse, et configuré pour être activé par le circuit de détection de faible charge (11),
dans lequel le circuit de détection de faible charge (11) comprend :

une première résistance (R1) configurée pour convertir le courant côté secondaire en une première tension (V1) ;
une deuxième résistance (R2) comportant une première borne connectée à la deuxième borne du transistor, une deuxième borne connectée à la masse, et configurée pour convertir un courant circulant dans le transistor (TR1) à une deuxième tension (V2) ;
un circuit de génération de tension (12) configuré pour générer une troisième tension (V3) changeant dans une direction inverse à la direction dans laquelle change la première tension (V1), dans lequel le circuit de génération de tension (12) comprend :

un circuit de résistance comprenant une pluralité de résistances (R21, R22) connectées en série entre la première borne de sortie (4) du convertisseur résonnant LLC et la masse ;
un premier amplificateur (OP1) configuré pour amplifier la première tension (V1) ; et
un deuxième amplificateur (OP2) qui comporte une entrée non inverseuse connectée à la sortie du premier amplificateur (OP1) et à la sortie du circuit de résistance, et configurée pour recevoir la troisième tension (V3), une entrée inverseuse configurée pour recevoir la deuxième tension (V2), et une sortie couplée à une borne de contrôle du transistor (TR1) et configurée pour sortir une tension (Von) pour attaquer le transistor (TR1), dans lequel le transistor (TR1) est activé à l'état de faible charge.

FIG. 1

FIG. 2

EP 3 605 819 B1

FIG. 3

24V

# FIG. 4

k=0.85

$$FR = \frac{\omega}{\omega 0}$$

Q=10

Q=5

Q=2.5

Q=1

Q=0.8

Voltage conversion rate M

$\sqrt{1-k^2} = 0.527$

Q=0.6

FR

FR(Standard normalized frequency)

# FIG. 5

FIG. 6

**EP 3 605 819 B1**

**REFERENCES CITED IN THE DESCRIPTION**

**Patent documents cited in the description**

- JP 2003052174 A
- JP H8340675 A
- JP 2013143877 A
- CN 103036425 B
- US 2006114698 A1